# FASCICULE DE BREVET EUROPEEN

(11) **EP 3 156 356 B1**
(45) Date de publication et mention de la délivrance du brevet: **04.03.2020**
(21) Numéro de dépôt: 16189869.7
(22) Date de dépôt: 21.09.2016
(51) Int. Cl.: B65H 19/18, B65B 41/12, B29C 65/18, B29C 65/00, B29C 65/78

(54) **ALIMENTATION POUR FARDELAGE**
ZUFÜHRUNG FÜR VERPACKVORGÄNGE MIT SCHRUMPFFOLIE
SUPPLY DEVICE FOR BUNDLING WITH A SHRINK-WRAP FOIL

(30) Priorité: 01.10.2015 FR 1559319
(43) Date de publication de la demande: 19.04.2017
(73) Titulaire: Sidel Packing Solutions, 21910 Corcelles-les-Cîteaux (FR)
(72) Inventeur: CHOPLIN, Gregory, 21910 CORCELLES LES CÎTEAUX (FR)
(74) Mandataire: Sidel Group

(56) Documents cités:
- DE-A1-102011 111 786
- DE-B3-102004 032 528
- FR-A5- 2 198 476
- US-A- 3 705 069

## Description

La présente invention relève du domaine des machines de conditionnement par fardelage, et a pour objet, d'une part, un dispositif de fourniture de film, et, d'autre part, un procédé mettant en œuvre ce dispositif, ainsi qu'une machine dans laquelle un tel dispositif est monté.

EP1379457 divulgue par exemple un procédé de permutation de bobine d'alimentation, dans lequel un nouveau film est engagé à détection de la fin de la bobine dévidée.

Dans le domaine de la permutation de bobines, on connait aussi GB1417972 qui propose un dispositif de fourniture capable de permuter entre une bobine dévidée et une bobine de réserve grâce à une structure rotative munie d'une paire de rouleaux entre lesquels les deux films viennent se placer. Un adhésif est disposé sur le film de réserve au préalable, permettant l'accroche entre les deux films. Ainsi, l'entraînement de l'ancien film dans la machine amène avec lui le nouveau film, ce qui garantit la continuité du process.

WO2010/121252 propose, pour la permutation automatique entre une bobine dévidée et une bobine de réserve, un rouleau tendeur contre lequel est enroulé le film dévidé après avoir séparé la bobine de la partie de film prise dans la machine. Le rouleur tendeur est ensuite déroulé contre la bobine de réserve, reliant alors, grâce à un adhésif fourni au préalable, le film de réserve avec le film dévidé retenue sur le rouleau tendeur. Un des inconvénients de ce principe est qu'il modifie l'état du film en aval à la permutation, puisqu'il faut en enrouler une partie sur le rouleau tendeur.

CA2021164 propose quant à lui de réaliser la permutation entre bobine dévidée et bobine de réserve en utilisant deux rouleaux centraux contrarotatifs, sur lequel chaque fois un film est reçu. Les films sont collés l'un contre l'autre au niveau de ces rouleaux grâce à un gicleur correspondant. Un des inconvénients de ce principe de fonctionnement est en particulier qu'il ne peut pas être étendu à plus de deux bobines, ce qui limite donc l'autonomie de la machine.

Enfin, on connaît aussi EP1600412 qui propose un principe reposant sur une barre de chargement, mobile transversalement vers le poste de soudure entre, d'une part, la bobine de réserve et l'extrémité du film de réserve. Les deux films sont ensuite soudés, contre la barre de chargement. Cette réalisation est toutefois encombrante, puisqu'il faut aménager le mouvement de la barre de chargement. En outre, la fixation du film de réserve change à chaque cycle, ce qui peut amener des erreurs de manipulation.

DE 10 2004 032 528 C5 est considéré comme l'art antérieur le plus proche et décrit un dispositif de fourniture suivant le préambule de la revendication 1 et un procédé de fourniture suivant le préambule de la revendication 9.

Face à cet état de l'art, il existe donc aujourd'hui un besoin d'améliorer les machines d'emballage par fardelage au moins au niveau de la solution de permutation automatisée de bobines, entre la bobine dévidée et une bobine de réserve.

L'invention vise ainsi à proposer une permutation de bobine qui soit autant que possible simple, rapide, ergonomique pour l'opérateur, et/ou peu encombrante.

Pour ce faire, l'invention propose, pour approcher l'un de l'autre les films à relier, de déplacer le film de réserve jusqu'au film en cours de distribution grâce à un mouvement de rotation d'un rotor dans la partie initialement supérieure duquel est retenue l'extrémité du nouveau film.

L'invention a ainsi pour objet un dispositif de fourniture de film pour conditionnement de produits par fardelage, ledit dispositif comprenant au moins deux dévidoirs, comprenant chacun au moins un arbre support pour bobine de film ainsi qu'un guidage de film, un rouleau de renvoi, jusqu'auquel, en fonctionnement, circule un film, dit film dévidé, depuis une bobine d'un des dévidoirs, dite bobine dévidée ; un chargeur, pour amener à proximité du film dévidé le film, dit film de réserve, d'une bobine de l'au moins un autre dévidoir, dite bobine de réserve.

Ledit chargeur comprenant un rotor, qui enroule autour de lui le film de réserve de sorte à l'amener à proximité du film dévidé. Ce dispositif est caractérisé en ce qu'il comprend un poste de soudure associé à chaque dévidoir, configuré pour relier le film de réserve au film dévidé en les soudant par un premier cordon de soudure, ledit dispositif étant configuré à faire à nouveau tourner le rotor dans le même sens de défilement que celui utilisé pour l'enroulement du film de réserve autour du rotor, et à relier le film de réserve au film dévidé en les soudant par un deuxième cordon de soudure.

L'invention a aussi pour objet une machine dans laquelle ce dispositif est monté, à savoir une machine de conditionnement par fardelage, comprenant un convoyeur à tapis sur lequel se trouvent des produits à enrober, un module d'enrobage au sein duquel les produits sont enrobés de film, ainsi qu'un four de rétreint thermique dans lequel circulent ultérieurement les produits enrobés, ladite machine comprenant, pour son alimentation en film, un dispositif de fourniture tel que décrit ci-dessus.

L'invention a aussi pour objet une méthode mise en œuvre par ce dispositif, à savoir un procédé de fourniture en film d'une machine de conditionnement par fardelage, ledit procédé comprenant des étapes consistant essentiellement à envoyer contre un rouleau de renvoi un film, dit film dévidé, depuis une bobine, dite bobine dévidée, permuter de bobine pour continuer à fournir un film depuis une autre bobine, jusqu'alors bobine de réserve, et, pour cela, stopper le film dévidé et le relier au film, dit film de réserve, de ladite bobine de réserve.

Ledit procédé comprenant une étape de chargement consistant essentiellement à faire tourner un rotor à la périphérie duquel est maintenue une partie d'extrémité du film de réserve, de sorte à enrouler le film de réserve autour dudit rotor et l'amener alors à proximité du film dévidé pour les relier. Ce procédé est caractérisé en ce que le film de réserve est relié au film dévidé en les soudant l'un à l'autre contre le rotor au niveau d'au moins deux cordons de soudure successifs dans le sens de défilement du film de réserve.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre un dispositif de fourniture avec une bobine de réserve prête à être utilisée ;
- la figure 2 schématise la mise en relation entre le film dévidé et le film de réserve ;
- la figure 3 montre un détail du dispositif de fourniture, en particulier le montage d'une barre de soudure ;
- la figure 4 est une vue d'ensemble de la machine selon l'invention.

L'invention a donc tout d'abord comme objet un dispositif de fourniture 1 de film pour conditionnement de produits par fardelage, ledit dispositif comprenant
- au moins deux dévidoirs 2, comprenant chacun au moins un arbre support 3 pour bobine de film ainsi qu'un guidage 4 de film,
- un rouleau de renvoi 5, jusqu'auquel, en fonctionnement, circule un film, dit film dévidé 6, depuis une bobine d'un des dévidoirs 2, dite bobine dévidée 7 ;
- un chargeur, pour amener à proximité du film dévidé 6 le film, dit film de réserve 8, d'une bobine de l'au moins un autre dévidoir 2, dite bobine de réserve 9, notamment dans le but de relier le film de réserve 8 au film dévidé 6.

Le dispositif de fourniture 1 amène donc le film nécessaire à un fardelage de produits, type bouteilles, organisés en lot, autrement dit à un enrobage de lots de produits à l'aide de film. Ce film se trouve sur une bobine pilotée en rotation, et est tiré en aval par un module de traction 15. Le dispositif de fourniture 1 alimente donc la machine de fardelage avec une bobine de film, alors dite bobine dévidée 7. Afin d'assurer une autonomie plus grande, le dispositif de fourniture 1 peut aussi recevoir une autre bobine, alors dite bobine de réserve 9, qui sera reliée automatiquement au film en cours, ce dans le but de réduire la nécessité d'intervention d'un opérateur. Dans l'absolu, le dispositif de fourniture 1 peut être conçu pour accueillir plus d'une autre bobine ou bobine de réserve 9. Le dispositif de fourniture 1 comprend donc au moins deux dévidoirs 2, l'un servant à supporter la bobine dévidée 7 et le au moins un autre servant à supporter une autre bobine de réserve 9. La bobine de réserve 9 reste dans le dévidoir 2 même lorsqu'elle devient bobine dévidée 7.

Le dispositif de fourniture 1 a un chargeur auquel peut venir être fixée une portion du film de réserve 8, préférablement une portion d'extrémité libre. Le chargeur sert ensuite en particulier à amener le film de réserve 8 dans l'environnement immédiat du film dévidé 6, et ce au niveau d'un poste de soudure 12 comme il va être décrit plus loin, pour que les deux soient reliés.

Le guidage de film 4 prend notamment la forme d'un rouleau en aval de l'arbre support 3.

Selon l'invention, le chargeur comprend un rotor 10, qui enroule autour de lui le film de réserve 9 de sorte à l'amener à proximité du film dévidé 6, un bloqueur 11 ou moyen de blocage 11 de film étant notamment prévu en aval du rouleau de renvoi 5, pour maintenir la tension du film en aval.

C'est donc par la rotation du rotor 10, auquel une portion du film de réserve 8 est reliée, que ledit film de réserve 8 s'enroule à la périphérie dudit rotor 10 et qu'une partie du film de réserve 8 est alors amenée à proximité du film dévidé 6. Le rotor 10 est en effet tel que sa surface périphérique, sur laquelle s'enroule le film de réserve 8, est à proximité du film dévidé 6, la position de ce dernier dépendant, d'une part, du guidage de film 4, et, d'autre part, du rouleau de renvoi 5 sur la périphérie desquels il circule.

Ainsi, selon une caractéristique additionnelle possible, le rotor 10, le rouleau de renvoi 5 et les dévidoirs 2 sont tels que la périphérie du rotor 10, sur laquelle s'enroule le film de réserve 9, s'étend à proximité du film dévidé 6, dans la zone entre, d'une part, le guidage 4 du dévidoir 2 de la bobine dévidée 7, et, d'autre part, le rouleau de renvoi 5. Il suffit alors d'enrouler le film de réserve 9 sur le rotor 10 pour que ledit film s'approche du film dévidé 6.

Le guidage 4 d'un dévidoir 2 est alors positionné de sorte que, lorsque la bobine qu'il porte est la bobine dévidée 7 et que son film est alors celui utilisé par la machine d'enrobage, ce film dit film dévidé 6 circule à proximité du rotor 10 au moins localement, son trajet étant défini par la position, d'une part, dudit guidage 4, et, d'autre part, du rouleau de renvoi 5.

L'arbre de support 3 est préférablement entraîné en rotation par un moteur piloté du dispositif de fourniture 1, éventuellement propre au dévidoir 2. Ce moteur piloté a préférablement un moyen de mesure de son angle de rotation, ainsi que du couple résistif.

Dans des configurations particulières, les au moins deux dévidoirs se font face, le rotor 10, et le rouleau de renvoi 5, sensiblement en vis-à-vis l'un de l'autre, étant montés entre eux, créant notamment une forme de triangle dans lequel se trouve le rotor 10, délimité par le rouleau de renvoi 5 et le guidage 4 de chacun des deux dévidoirs 2. Comme il sera encore détaillé plus loin, un léger décalage peut être prévu entre le rotor 10 et le rouleau de renvoi 5. Avec un rotor 10 monté dans une telle position centrale, le film dévidé 6 vient toujours à proximité du rotor 10, quel que soit le dévidoir 2 qui porte la bobine dévidée 7.

Selon une autre caractéristique additionnelle possible, le dispositif de fourniture 1 comprend, associé à chaque dévidoir 2, un poste de soudure 12, pour relier le film dévidé 6 d'une bobine dudit dévidoir 2 au film de réserve 8 d'une bobine de l'au moins un autre dévidoir 2, ledit poste de soudure 12 comprenant deux mâchoires entre lesquelles sont pris les deux films, l'une des mâchoires étant formée par la périphérie du rotor 10, l'autre étant disposée en vis à vis.

En fonctionnement, le film dévidé 6 s'étend de façon continue depuis la bobine dévidée 7 jusqu'au module de traction 15 de film que comporte la machine de conditionnement, ce dernier assurant la traction du film dévidé 6 en aval. Le principe utilisé ici est donc de fixer le film de réserve 8 sur le film dévidé 6, relié au module de traction 15. En séparant ensuite la bobine dévidée 7, l'avance du film aura pour effet de consommer tout d'abord le reste du film de l'ancienne bobine, puis le film de la nouvelle bobine. Cette liaison se fait par soudure au sein d'un poste de soudure 12 au niveau duquel se trouvent chacun des deux films : le film de réserve 8 compte tenu de sa présence sur le rotor 10 dont une portion de la périphérie contribue à former l'une des mâchoires, et le film dévidé 6 compte tenu des positions du guidage 4 et du rouleau de renvoi 5. Les deux films se trouvent entre la surface périphérique du rotor et la surface de la mâchoire décrite plus loin.

Dans certains modes de réalisation, la mâchoire en vis-à-vis du rotor 10 prend la forme d'une barre de soudure 13 chauffante, mobile en direction du rotor 10 pour presser contre lui les deux films ensemble. La barre de soudure 13, formant contre mâchoire, est ainsi préférablement mise en mouvement en direction du rotor 10 par la manœuvre pilotée d'un actionneur du type vérin. Le poste de soudure 12 se ferme sur les deux films par la venue de la barre de soudure 13 contre le rotor 10. Un apport de chaleur permet alors de souder les films. Bien évidemment, d'autres façons de réaliser l'accrochage du film de réserve 8 sur le film dévidé 6 sont possibles.

Selon une caractéristique additionnelle possible, la mâchoire en vis-à-vis du rotor 10 est interchangeable et démontable. La barre de soudure 13 est alors préférablement montée sur une platine 18 pivotante. Le pivotement de la platine 18 permet de dégager la barre de soudure 13 de l'environnement du rotor 10 et d'en faciliter alors l'accès pour un opérateur. Cela apporte aussi l'espace libre nécessaire pour les mouvements de démontage de la barre de soudure 13, le cas échéant. Le décrochement de la barre de soudure 13 peut en effet être prévu le long d'un mouvement perpendiculaire à la direction dans laquelle s'étend ladite barre 13. En l'absence d'un montage sur une platine 18 pivotante, la barre 13 serait alors décrochée dans un mouvement qui l'approcherait du rotor 10 et donc difficile à réaliser.

Alternativement, on peut envisager une barre de soudure 13, s'étendant transversalement à la direction d'avance du film et donc parallèlement au rotor 10, et démontable par translation parallèle à l'axe de ce rotor 10.

Dans des modes de réalisation possibles, le chargeur présente un moyen de fixation 14 par aimantation pour retenir une portion d'extrémité libre du film de réserve 8 à la périphérie du rotor 10. Il peut par exemple s'agir d'une paire de lamelles attirées l'une vers l'autre par aimantation et entre lesquelles vient l'extrémité du film de réserve 8. Ce moyen de fixation 14 est positionné à la périphérie du rotor 10. Il peut être amovible pour être placé sur le film de réserve 8 là où ce dernier se trouve. Alternativement, le moyen de fixation 14 peut être fixe par rapport au rotor 10 et c'est alors le film de réserve 8 que l'on vient placer là où se trouve le moyen de fixation 14, à la périphérie du rotor 10.

L'invention a aussi pour objet une machine utilisant un tel dispositif, à savoir une machine de conditionnement par fardelage, comprenant un convoyeur à tapis sur lequel se trouvent des produits à enrober, un module d'enrobage au sein duquel les produits sont enrobés de film, ainsi qu'un four de rétreint thermique dans lequel circulent ultérieurement les produits enrobés, ladite machine comprenant, pour son alimentation en film, un dispositif de fourniture 1 tel que décrit ci-dessus.

Une telle machine comprend aussi le module de traction 15 permettant de tirer le film vers l'aval. En aval du rouleau de renvoi 5 se trouve préférablement un tampon organisé par des axes mobiles autour desquels s'enroule le film dévidé 6. La tension du film dévidé 6 est régulé entre, du part, la force de traction du module de traction 15, et, d'autre part, la rotation contrôlée de la bobine correspondante.

L'invention a aussi pour objet un procédé mettant en œuvre le dispositif tel que décrit ci-dessus, à savoir un procédé de fourniture en film d'une machine de conditionnement par fardelage, ledit procédé comprenant des étapes consistant essentiellement à
envoyer contre un rouleau de renvoi 5 un film, dit film dévidé 6, depuis une bobine, dite bobine dévidée 7,
permuter de bobine pour continuer à fournir un film depuis une autre bobine, jusqu'alors bobine de réserve 9, et, pour cela, stopper le film dévidé 6 et le relier au film, dit film de réserve 8, de ladite bobine de réserve 9. Comme il a déjà été évoqué, la liaison entre les deux films peut se faire par soudure thermique.

Selon l'invention, le procédé comprend une étape de chargement consistant essentiellement à faire tourner un rotor 10 à la périphérie duquel est maintenue une partie d'extrémité du film de réserve 8, de sorte à enrouler le film de réserve 8 autour dudit rotor 10 et l'amener alors à proximité du film dévidé 6 pour les relier.

Le film dévidé est bloqué en aval au rouleau de renvoi 5, de sorte que les manipulations liées à la permutation de bobine et qui ont lieu en amont du rouleau de renvoi 5 se font sans dégrader l'état de tension du côté poste de fardelage. Une fois les films reliés, la portion du film dévidé 6 qui est en amont à la soudure est déconnecté du module de traction 15 par déchirure provoqué par l'enroulement de la bobine dévidée 7. Il en va de même pour la portion du film de réserve 8 qui est en aval à la soudure. Ainsi, le module de traction 15 est relié au reste du film dévidé 6, puis, relié à lui, au film de réserve 8.

Selon une caractéristique additionnelle possible, le film de réserve 8 est relié au film dévidé 6 en les soudant l'un à l'autre contre le rotor 10. Ainsi, le fait d'enrober en une couche maximum le film de réserve 8 sur le rotor permet non seulement de l'amener à proximité du film dévidé mais permet aussi de l'emmener sur une surface complémentaire contre laquelle une pression peut être exercée à l'occasion de la soudure, par un élément du type barre de soudure 13.

Selon une autre caractéristique additionnelle possible, le film de réserve 8 est relié au film dévidé 6 en les soudant l'un à l'autre au niveau d'au moins deux cordons de soudure successifs dans le sens de défilement du film. Cela est réalisé en faisant tourner davantage le rotor 10, ce qui a pour effet d'amener une autre portion de la paire de film pour une soudure. L'avantage de créer une telle double soudure est que l'entraînement du film de réserve 8 par le film dévidé 6 est plus sûr, puisque la tenue est plus solide. En outre, au moins un des cordons de soudure n'est pas fragilisé par la déchirure des tronçons de film qui ne doivent plus être envoyés vers le module de traction 15.

Selon une autre caractéristique additionnelle possible, le procédé comprend une étape consistant essentiellement à désolidariser la bobine dévidée 7, et ce en l'entraînant dans une rotation qui tend jusqu'à la rupture le film dévidé 6, en amont de la soudure, et préférablement aussi le film de réserve 8, en aval de la soudure. Cela est possible puisque l'arbre de support 3, sur lequel est monté la bobine dévidée 7, est assujetti à un moteur.

Enfin, selon une autre caractéristique additionnelle possible, le procédé comprend une étape de préparation de la permutation, au cours de laquelle le rotor 10 est tourné jusqu'à présenter, en partie supérieure, un moyen de fixation 14 dont il est pourvu pour retenir le film de réserve 8. Ce maintien en position peut être exécuté avec un moyen de fixation 14 amovible ou non amovible.

Dans le mode de réalisation illustré aux figures annexées, le dispositif de fourniture 1 peut alterner de façon automatique et autonome entre deux bobines de film. Ce qui signifie que la machine est alimentée tour à tour par le dispositif de fourniture 1 avec l'une ou l'autre bobine. Il est à cet effet pourvu de deux arbres de support 3, chacun pour recevoir une bobine de film. Dans l'absolu, plusieurs tels arbres motorisés pourraient être envisagés.

Tour à tour, le film utilisé au sein de la machine dans le poste de fardelage en aval est celui fourni par la bobine de l'un des arbres 3 support puis par la bobine de l'autre arbre 3. Bien entendu, des configurations avec plus de deux bobines sont possibles. De façon générale, le film suivant est fixé sur le film en cours, ce dernier étant ensuite séparé de sa bobine d'alimentation.

Le film alimenté par les bobines est envoyé vers le module d'enrobage proprement dit à l'aide d'un rouleau de renvoi 5, qui forme donc le point de sortie du dispositif de fourniture 1. Ce rouleau de renvoi 5 prend la forme d'un arbre rotatif, contre lequel circule le film, quelle que soit la bobine dont il est tiré.

A chaque arbre 3 de support est associé un guidage 4 de sorte que le film déroulé depuis la bobine monté sur ledit arbre 3 support circule sur ce guidage 4, puis sous le rouleau d'entrée du rouleau de renvoi 5. Ce guidage 4 prend préférablement la forme d'un arbre, qui garantit une circulation indépendamment de la taille de la bobine. Quel que soit le diamètre de la bobine dévidée 7, le film dévidé 6 passe donc toujours contre le guidage de film 4, ce qui permet d'assurer que le film passe toujours par le même endroit, indépendamment de la quantité de film restante.

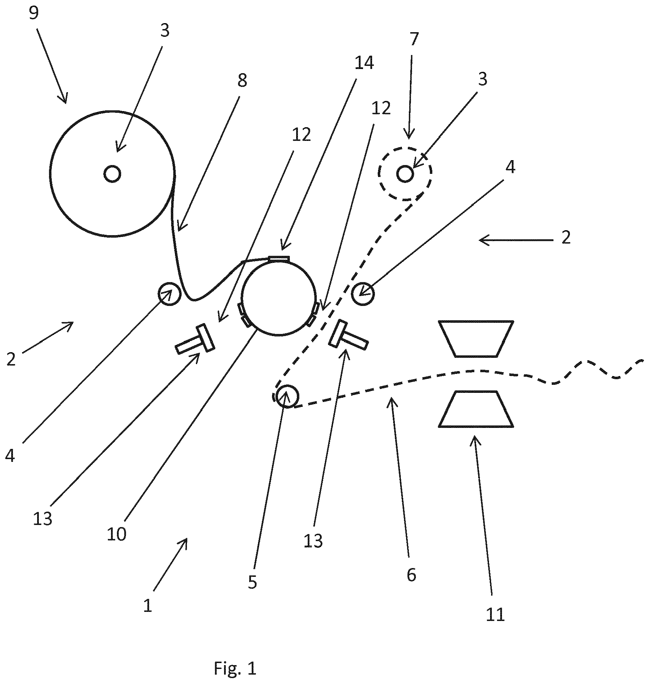

Ainsi, comme le montre la figure 1, le film en cours d'alimentation quitte sa bobine, circule au-dessus du guidage 4 associé, puis circule autour jusque sous le rouleau de renvoi 5, et continue ensuite son trajet dans la machine vers le poste dans lequel il est découpé puis enroulé autour de produits regroupés en lot sur un convoyeur tapis.

Le film alimenté dans la machine est nommé film dévidé 6, et la bobine associée est alors appelée bobine dévidée 7. La au moins une autre bobine, en attente, est nommée bobine de réserve 9.

Le procédé de permutation entre la bobine dévidée 7 et la bobine de réserve 9 va maintenant être décrit.

Afin d'assurer la continuité de l'alimentation en film de la machine de fardelage, on relie mécaniquement le film de réserve 8 à la portion de film dévidé 6 qui se trouve entraînée dans la machine. En séparant ensuite cette portion de la bobine dévidée 7, la traction par la machine aura pour effet d'attirer ladite portion, et, partant, le film de réserve 8 auquel il est relié. La machine est alors alimentée avec ce qui était précédemment la bobine de réserve 9.

Plus précisément, la machine de fardelage est équipée d'une table dans laquelle le film dévidé 6 est tiré. En amont, le film dévidé 6 circule dans un pantin fait de rouleaux parallèles et transversaux à l'avance du film, mobiles entre eux sous l'effet de la tension du film qui circule de l'un à l'autre en les enrobant. Encore en amont se trouve le rouleau de renvoi 5. En complément à l'aspiration par la table en aval, le dévidoir 2 est préférablement motorisé et peut donc entraîner en rotation la bobine qu'il supporte, et ce dans le sens d'enrouler ou dérouler le film. La tension du film dévidé 6 en aval de la bobine dévidée 7 est ainsi contrôlée par la combinaison, d'une part, de la rotation de la bobine dévidée 7, et, d'autre part, de la traction de la table, le pantin entre eux formant zone tampon dans lequel la tension du film est conservée par résistance élastique du tampon, par ressort ou contrepoids, etc.

Le module de traction 15 comprend donc la table et le pantin, la tension du film dépendant aussi de la rotation pilotée du dévidoir 2 portant la bobine dévidée 7.

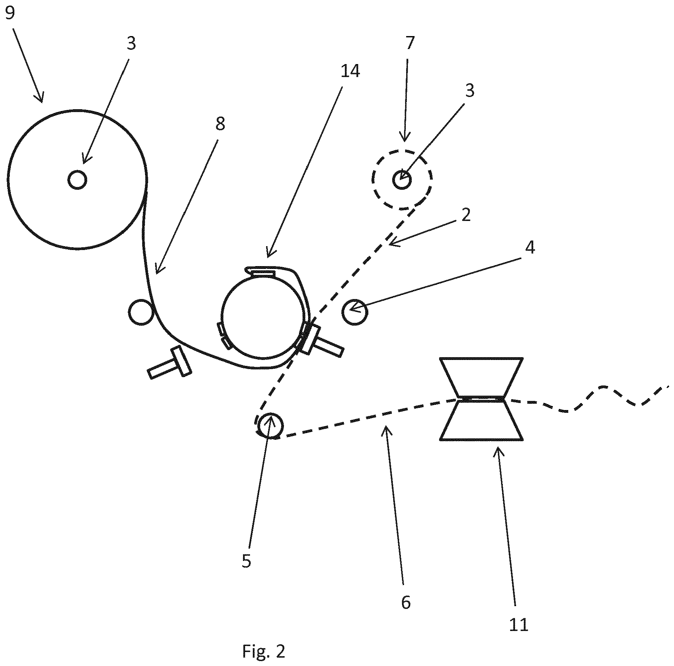

Les figures 1 et 2 montrent la situation, à droite, d'une bobine dévidée 7 alimentant la machine. Le film dévidé 6 s'étend donc entre la bobine dévidée 7 et le rouleau de renvoi 5, jusque plus loin dans la machine. Lorsque nécessaire, car la bobine dévidée 7 est quasi vide, ou simplement lorsque souhaité, pour un changement de motif de film, par exemple, l'alimentation en film de la machine est stoppée, ce qui signifie que le film dévidé 6 n'est plus tiré dans la machine.

Pour ce faire, la bobine dévidée 7 est arrêtée progressivement, et le module de traction 15 éventuellement mis à l'arrêt en fonction de la capacité du tampon qui les sépare, et le film dévidé 6 n'avance donc plus. Un moyen de blocage 11 est alors mis en œuvre pour bloquer le film dévidé 6 entre la bobine dévidée 7 et le module utilisant le film, ou module de traction 15, la tension en aval étant conservée. La bobine dévidée 7 est ensuite légèrement déroulée pour réduire la tension du film dévidé 6, ce pour éviter une soudure sous tension, qui est alors susceptible de conduire à une déchirure. La portion amont du film dévidé 6 est alors prête à être reliée au film de réserve 8.

On notera que dans les cas particuliers d'un film à motif qui se répètent régulièrement pour figurer à une position prédéfinie sur le groupe de produits à farderler, il est important d'arrêter le film dévidé 6 à une position contrôlée. La soudure est alors réalisée entre deux motifs successifs, ce qui permet aussi de respecter la régularité de répétition. La machine comprend alors une cellule de détection qui identifie la position du motif en aval du rouleau de renvoi 5. La bobine dévidée 7 peut être entraînée en enroulement ou déroulement pour obtenir la position attendue du film dévidé 6 dans le poste de soudure 12. Dans ce genre de configuration, il est aussi important de maîtriser le film de réserve 8 et de s'assurer qu'il soit correctement positionné dans le chargeur pour que la soudure ne se trouve pas sur ses propres motifs.

Pour approcher le film de réserve 8 du film dévidé 6, le dispositif de fourniture 1 comprend un rotor 10 ou chargeur, qui forme un moyen de déplacement de film, amenant le film de réserve 8, depuis une position où le chargement manuel est facile, jusqu'à être suffisamment proche du film dévidé 6 pour qu'ils soient reliés.

La bobine de réserve 9 est préférablement préparée et amenée dans le dispositif de fourniture 1 avant qu'il soit nécessaire de changer le film. La bobine de réserve 9 est placée sur l'arbre de support 3 correspondant, puis l'extrémité du film de réserve 8 est amenée dans un moyen de fixation 14 que comprend le chargeur de film de réserve 8, ou rotor 10.

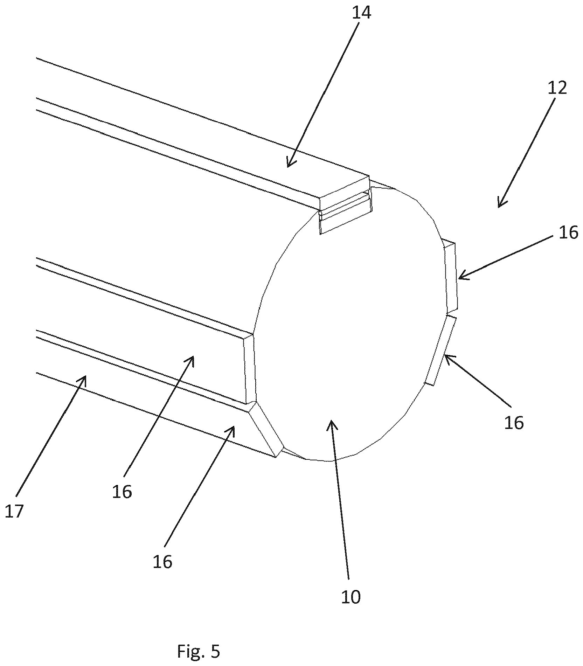

Ce moyen de fixation 14 peut fonctionner sur la base d'un principe de pince ou étau, par exemple avec un chargeur muni d'une surface périphérique d'accueil, sur laquelle le film de réserve 8 peut être posé, une lamelle venant ensuite être plaquée par magnétisme contre le chargeur, pour que l'extrémité du film de réserve 8 soit prise entre le chargeur et ladite lamelle. Dans la figure 5, le chargeur présente un rotor 10 sous forme de cylindre à base métallique. Préférablement, le cylindre est en aluminium, avec des logements périphériques pour accueillir le moyen de fixation 14, qui prend alors essentiellement la forme de deux lamelles coopérant magnétiquement l'une contre l'autre, et entre lesquelles le film de réserve 8 peut être pris. Le rotor lui-même n'est donc pas nécessairement magnétique. L'extrémité du film de réserve 8 est posée à la périphérie du rotor 10, et au moins une pièce métallique aimantée vient être appliquée pour que le film de réserve 8 soit fixé contre le rotor 10 et que la rotation de ce dernier entraîne le film de réserve 8. A ce stade, seule l'extrémité du film de réserve 8 est contre le rotor 10.

Le positionnement de l'extrémité du film de réserve 8 dans le moyen de fixation 14 est préférablement exécuté par un opérateur. Le rotor 10 est positionné pour que, lorsque le film de réserve 8 doit être déposé sur le rotor 10, le moyen de fixation 14 soit en partie haute, et donc facilement accessible pour l'opérateur. On constatera que le montage de l'extrémité du film de réserve 8 dans le moyen de fixation 14 se fait avec la même méthode quelle que soit la position de la nouvelle bobine.

Ainsi, le moyen de fixation 14 peut être fixé à demeure dans le rotor 10, et le film de réserve 8 doit alors y être amené. Alternativement, le moyen de fixation 14 peut être amovible et momentanément retiré du rotor 10 : il est alors possible d'une façon très ergonomique de placer le film de réserve 8 dans le moyen de fixation 14, là où se trouve ledit film, puis de venir positionner le moyen de fixation 14 sur le rotor 10 ultérieurement.

Amener le film de réserve 8 au moyen de fixation 14 est généralement exécuté avant la mise à l'arrêt du film dévidé 6. Un opérateur peut se charger de la fourniture et mise en place de la au moins une bobine de réserve 9. Un équipement robotique peut aussi être prévu pour amener la au moins une bobine de réserve 9.

Une fois l'extrémité du film de réserve 8 posée contre le rotor 10 ou chargeur et fermement retenue contre lui par le moyen de fixation 14, ledit rotor 10 entame un mouvement de rotation. Le film de réserve 8 vient alors s'enrouler autour du rotor 10, et la bobine de réserve 9 se déroule donc très légèrement. Plus précisément, la bobine de réserve 9 est préférablement déroulée au préalable suffisamment pour que la rotation subséquente du rotor 10 ne provoque pas de rotation non contrôlée de la bobine de réserve 9. Une fois le rotor 10 et le film de réserve 8 en position pour une soudure, la bobine de réserve 9 est enroulée pour retendre le film de réserve 8, sans toutefois dépasser un seuil de tension à partir duquel la soudure peut s'accompagner d'une déchirure de film, la bobine de réserve 9 étant alors par exemple légèrement déroulée après que le couple à l'enroulement ait atteint un seuil prédéfini.

Préférablement, le rotor 10 effectue juste la rotation suffisante pour qu'une seule couche de film de réserve 8 arrive à proximité du film dévidé 6, et que le rotor 10 ne soit pas recouvert de plus d'une couche. Le rotor 1 peut être entraîné par un vérin rotatif d'amplitude inférieure à un tour complet.

Le chargeur entraîne le film de réserve 8 de sorte à ce qu'il arrive dans l'environnement immédiat du film dévidé 6. La proximité du film de réserve 8 et du film dévidé 6 permet alors une soudure entre eux, comme décrit ci-dessous.

Le film de réserve 8 est amené dans l'environnement immédiat du film dévidé 6 car la surface périphérique du rotor 10 passe à proximité du film dévidé 6 lorsque celui-ci s'étend entre le rouleau de renvoi 5 et la bobine dévidée 7, et que le film de réserve 8, sous l'effet de la rotation du chargeur ou rotor 10, s'enroule contre cette surface périphérique extérieure du rotor 10.

Après la rotation du chargeur ou rotor 10, le film dévidé 6 et le film de réserve 8 sont donc au moins localement proches l'un de l'autre, dans une zone où ils peuvent être reliés facilement l'un à l'autre. Le chargeur déplace le film de réserve 8 pour qu'il se trouve proche du film dévidé 6, dans une zone d'action d'un poste de soudure 12. La rotation du rotor 10 a non seulement pour effet d'amener le film de réserve 8 à proximité du film dévidé 6 dans une zone de soudure, mais aussi d'amener le film de réserve 8 dans ladite zone de soudure, c'est-à-dire en vis-à-vis d'une barre de soudure 13 mobile, et contre une surface complémentaire au niveau du rotor 10.

L'opération suivante consiste alors à réaliser une soudure thermique pour relier les deux films ensemble. Pour ce faire, les deux films, dans la zone où ils sont proches, sont amenés au contact l'un de l'autre simultanément à un apport de chaleur. De façon préférée, comme le montrent les figures, les deux films sont poussés contre le rotor 10 par un élément chauffant, ou barre de soudure 13, ce qui a pour effet que les deux films sont au contact l'un de l'autre et sous l'effet d'un apport de chaleur et sont ainsi soudés thermiquement l'un à l'autre. A chaque dévidoir 2 est donc associée une barre de soudure 13 : une à gauche et une à droite dans les figures 1 et 2.

La barre de soudure 13 déplacée en direction du rotor 10 a ainsi pour effet d'amener le film dévidé 6 contre le film de réserve 8, lui-même contre le rotor 10. La barre de soudure 13 est munie de moyens de chauffage adéquats.

Bien entendu, la rotation du rotor 10 ou chargeur qui a eu pour effet d'enrouler autour de lui le film de réserve 8 a une amplitude telle que le rotor 10 offre en vis-à-vis de la barre de soudure 13 une surface acceptant l'apport de chaleur et le contact voire la pression de la barre de soudure 13. Le rotor 10 présente ainsi au moins une surface de réception 16 à sa périphérie ou circonférence, contre laquelle peut venir la barre de soudure 13 de sorte à réaliser la soudure entre les deux films. Cette surface de réception 16 est préférablement plane, ce qui augmente la surface disponible pour la soudure, dont la résistance varie généralement avec la taille.

A ce stade, une traction sur le film, exercée par le module de fardelage, aurait alors pour effet d'amener, à partir de cette soudure où les deux films sont reliés, tant le film dévidé 6 relié à la bobine dévidé 7 que le film de réserve 8 relié à la bobine de réserve 9. Après cette soudure, il est donc nécessaire de séparer la bobine dévidée 7 de l'entraînement de la machine.

De façon préférée, c'est lorsque les deux films sont l'un contre l'autre pris ensemble entre, d'une part, le rotor 10, et, d'autre part, la barre de soudure 13, que la bobine dévidée 7 est mise en rotation dans le sens inverse de celui de l'alimentation. Par cette rotation, la portion de film dévidé 6 entre la bobine dévidée 7 et la soudure est séparée de cette dernière. Comme le film dévidé 6 est chaud à l'occasion de la soudure, la traction qu'exerce la rotation inverse de la bobine dévidée 7 a pour effet de rompre le film dévidé 6 au niveau de la soudure. La soudure et la traction de la bobine dévidée 7 ont aussi pour effet de séparer de la soudure le tronçon de film de réserve 8 enroulé autour du rotor 10 entre ladite soudure et le moyen de fixation 14. La bobine dévidée 7 se trouve alors reliée grâce à cette soudure à un tronçon de film de réserve 8, attaché au moyen de fixation 14, qu'il suffit ensuite de dégager. La bobine de réserve 9 quant à elle se trouve reliée grâce à cette soudure à un tronçon de film dévidé 6 qui arrive jusque dans le poste alimenté ou module de traction 15.

La bobine dévidée 7 est enroulée pour tester la tenue mécanique de la soudure par une mesure du couple résistif associé à la rotation d'enroulement. L'ouverture du poste de soudure 12 est commandée dès lors que le couple résistif associé ne chute pas sous un seuil faible prédéfini, qui représenterait une déchirure. En cas de détection de soudure par baisse voire chute du couple résistif à l'enroulement, le poste de soudure 12 reste fermé et une procédure d'anomalie est exécutée.

Après ouverture du poste de soudure 12 et libération du film dévidé 6 et du film de réserve 8 alors soudés ensemble, la soudure peut être refroidie par un jet d'air envoyé par un moyen de soufflage 19 monté sur la platine 18. Il peut s'agir de deux buses à proximité des extrémités transversales. Cela permet d'accélérer la procédure de permutation et de rendre la machine opérationnelle plus tôt.

Lorsque la barre de soudure 13 s'éloigne du rotor 10, les films jusqu'alors retenus sont bien sûr libérés et peuvent de nouveau être entraînés et alimentés dans la machine. L'autre partie, entre le moyen de fixation 14 et la bobine dévidée 7, alors à l'arrêt, est simplement ôtée.

Après la rupture du film dévidé 6 au niveau de la soudure sous l'effet de la rotation inverse de la bobine dévidée 7, le module de fardelage de la machine est alimenté par la succession d'une portion de film dévidé 6, reliée au film de réserve 8 et donc à la bobine de réserve 9. A ce stade, la succession des deux films se trouve donc prête à être envoyée en aval dans la machine, tirée par le module de traction 15.

Une fois la machine mise en route, après relâchement du moyen de blocage 11, le tronçon de film dévidé 6 est absorbé, puis le film de réserve 8. On comprend qu'à ce stade, le film précédemment dit « de réserve » devient film dévidé 6.

Il est alors possible de dégager simplement le reste de la bobine qui était bobine dévidée 7 de son arbre de support 3.

Comme le montre la figure 2, la configuration du dispositif de fourniture 1 est telle que le rouleau de renvoi 5 se trouve à peu près en vis-à-vis du rotor 10, ou chargeur, en particulier disposés verticalement l'un au-dessus de l'autre. On préfère une configuration où le rouleau de renvoi 5 et les deux guidages de film 4 sont positionnés de sorte que film circulant successivement sur eux soient en miroir l'un de l'autre par rapport à un axe vertical. Le rouleau de renvoi 5 peut être légèrement décalé par rapport au rotor 10. Un des dévidoirs 2 se trouve alors d'un côté de l'axe rotor 10 - rouleau de renvoi 5, et l'autre se trouve de l'autre côté. Il est envisageable d'avoir plusieurs dévidoirs 2, un guidage de film 4 étant éventuellement commun à plusieurs dévidoirs 2. Avoir plus que deux dévidoirs 2 permet d'augmenter l'autonomie de la machine. Il est en outre envisageable de prévoir un moyen piloté pour amener au rotor 10 l'extrémité libre du film de réserve 8 à utiliser, éventuellement du moyen de fixation 14 auquel il est assujetti.

Le film dévidé 6 circule donc de la bobine dévidée 7 jusqu'au rouleau de renvoi 5 entre le rotor 10 et la barre de soudure 13, ces derniers formant ensemble un poste de soudure 12.

Préférablement, une barre de soudure 13 est associée à chaque dévidoir 2, de sorte à pouvoir souder un film de réserve 8 au film débité par la bobine montée dans ledit dévidoir 2, formant alors respectivement film dévidé 6 et bobine dévidée 7. La barre de soudure 13 est mobile en direction du rotor 10 et forme, avec au moins une partie de la surface périphérique de ce dernier, un poste de soudure 12 pour relier ensemble le film en cours d'alimentation par la bobine qui est associée à ladite barre de soudure 13, et le film d'une autre bobine, formant alors film de réserve 8.

Après que le rotor 10 ait effectué la rotation nécessaire pour amener le film de réserve 8 attaché à sa périphérie dans l'environnement immédiat du film dévidé 6, au niveau du poste de soudure 12, la barre de soudure 13 est approchée du rotor 10 jusqu'à presser ensemble les deux films contre le rotor 10 et les fixer l'un à l'autre sous l'effet de la chaleur générée par ladite barre.

Préférablement, le mouvement inverse de la bobine dévidée 7, visant à rompre le film dévidé 6 en une partie reliée à la machine et au film de réserve 8 et une autre partie reliée à la bobine dévidée 7, est au moins commencé voire totalement exécuté avant que la barre de soudure 13 ne s'éloigne suffisamment du rotor 10 pour permettre un dégagement des deux films alors soudés.

Les figures illustrent le cas d'une permutation entre une bobine dévidée 7 à droite et une bobine de réserve 9 à gauche. Les sens de rotation du rotor 10 sont inverses pour la permutation inverse. Le film de réserve 8 est fixé sur la partie supérieure du rotor 10. Puis le rotor 10 est tourné dans le sens inverse des aiguilles d'une montre, de sorte que le film de réserve 8 ne forme pas plus d'une couche à la périphérie du rotor 10 et qu'il recouvre d'une seule couche la partie de la surface du rotor 10 contre laquelle vient la barre de soudure 13 pour relier ensemble une couche de film dévidé 6 alors arrêté et une couche de film de réserve 8.

Afin de renforcer la fixation entre les deux films, il est envisageable de procéder à plusieurs fixations successives entre les films, en particulier deux. Dans la réalisation décrite ci-dessous, celle opérée en deuxième est effectuée, par rapport à la première, du côté de l'extrémité libre du film de réserve 8.

Ainsi, on réalise une première soudure comme il a déjà été décrit. Cependant, après cette soudure, le film dévidé 6 n'est pas déchiré au niveau la soudure avec un mouvement inverse de la bobine dévidée 7. Après dégagement de la barre de soudure 13, le rotor 10 est tourné de sorte à amener en vis-à-vis de ladite barre une zone de film de réserve 8 qui se trouve entre la soudure précédemment exécutée et l'extrémité libre retenue dans le moyen de fixation 14. Une rotation d'un angle de 30 degrés peut par exemple être exécutée. Dans le même repère que précédemment, cette rotation s'exécute en sens horaire, c'est-à-dire en sens inverse de celui utilisé pour amener le film de réserve 8 contre le film dévidé 6. Cette rotation s'effectue avec un contrôle de la tension des films, et peut, par exemple, s'accompagner d'une mise en rotation adéquate des bobines : le film dévidé 6 est tiré depuis la bobine dévidée 7 et le film de réserve 8 est poussé vers la bobine de réserve 9.

Une fois une nouvelle portion de film de réserve 8 mise en vis-à-vis de la barre de soudure 13, avec une nouvelle portion de film dévidé 6, la barre de soudure 13 peut à nouveau procéder à son mouvement d'approche du rotor 10, jusqu'à lier ensemble les deux films par thermosoudure.

On comprendra que réaliser une pluralité de soudure est très aisé, puisqu'il suffit de procéder à nouveau à une ouverture du poste de soudure 12, une rotation du rotor 10, et une fermeture du poste de soudure 12. Le film dévidé 6 est déchiré au niveau de la dernière soudure désirée grâce à la rotation de traction de la bobine dévidée 7. Cette rotation débute voire est totalement exécutée avant que la barre de soudure 13 ne se dégage suffisamment du rotor 10 pour permettre un mouvement des films.

Une telle deuxième soudure lie ainsi, par rapport à la première, une zone du film dévidé 6 plus en amont et donc davantage vers la bobine dévidée 7, à une zone du film de réserve 8, plus en aval, et donc davantage vers l'extrémité libre. Le film de réserve 8 et le film dévidé 6 sont alors reliés avec deux cordons de soudure successifs, transversaux par rapport à la direction de défilement. Une telle succession de soudures permet d'assurer une bonne continuité du film aspiré par la machine, ce qui réduit donc considérablement le risque d'un mauvais enchaînement lors de la remise en route. Si la fixation entre la portion de film dévidé 6 encore dans la machine et le film de réserve 8 à suivre est trop faible, elle risque de se rompre à l'occasion de la remise en fonctionnement. Il faut alors recommencer la manœuvre de chargement initial.

L'avantage de réaliser des soudures multiples est qu'il existe au moins une soudure qui n'est pas fragilisée par la déconnexion de la bobine dévidée 7 par déchirure. Autrement dit, la séparation du film dévidé 6 au niveau de la soudure se fait sans nuire à la qualité de la tenue.

Une fois le film de réserve 8 relié au film dévidé 6, et ce dernier déchiré de sorte à ne plus relier la bobine dévidée 7 à l'aspiration de la machine, le moyen de blocage 11 peut être ouvert, ce qui permet alors à la machine de tirer la portion restante du film dévidé 6, puis le film de réserve 8 relié à ladite portion au niveau de leur soudure.

Dans le mode principal de réalisation de l'invention, le film de réserve 8 est relié au film dévidé 6 en les soudant par un premier cordon de soudure, puis en faisant à nouveau tourner le rotor 10 dans le même sens de défilement que celui utilisé pour l'enroulement du film de réserve 8 autour du rotor 10, et le film de réserve 8 est relié au film dévidé 6 en les soudant par un deuxième cordon de soudure.

Ainsi, on réalise une première soudure comme il a déjà été décrit. Avant de faire la première soudure, on actionne un tire film pour créer une réserve de film. Ce tire film prend éventuellement la forme d'une barre sur laquelle est montée à chaque extrémité un vérin, et la barre du tire film a pour fonction de pousser le film et ainsi créer une réserve de film. Bien entendu, d'autres réalisations pourraient être envisagées. Ce tire film est placé entre le moyen de blocage 11 et la bobine dévidée 7. Une fois la première soudure réalisée, le tire film est relâché et le rotor 10 est tourné à nouveau dans le même sens de défilement que pour la mise en place du film de réserve 8 pour la réalisation de la première soudure, en d'autres termes, dans le même sens de défilement que celui utilisé pour l'enroulement du film de réserve autour du rotor 10. Cette rotation peut par exemple être d'environ 30 degrés. Puis la deuxième soudure est réalisée, la barre de soudure 13 venant vers le rotor 10 pour thermo souder les deux films. Enfin, la bobine dévidée 7 est enroulée pour rompre le film au niveau de la deuxième soudure.

La première soudure contribue à lier les deux films entre eux, c'est-à-dire, le film dévidé 6 et le film de réserve 8. La deuxième soudure contribue à localiser la rupture entre les deux films. En outre, on comprend qu'avec un tel sens de rotation du rotor 10 entre les deux soudures, seule l'une des deux est entraînée dans la machine en aval lors de la reprise de la production. La première soudure des deux à être effectuée est en effet séparée du film qui sera fournie à la machine par la suite. La séparation entre les films, à savoir celui depuis la machine et ceux depuis la zone de soudure jusqu'à, respectivement, chacune des deux bobines, se fait au niveau de la deuxième soudure des deux à être réalisées

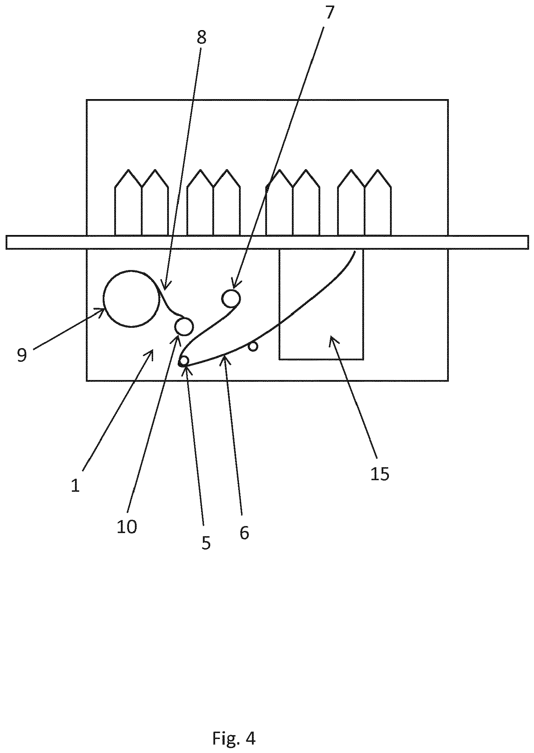

La figure 4 illustre une machine de conditionnement par fardelage. Elle comprend un tapis sur lequel sont placés des produits à enrober de film. Le film est généralement alimenté par le dessous du tapis. Le dispositif de fourniture 1 est alors positionné sous le tapis. Un module de traction 15 tire le film pour ensuite le découper à la longueur requise puis l'envoyer pour enrober les produits au-dessus du tapis. Relier ensemble l'extrémité du film de réserve 8 avec le film dévidé 6 et donc tiré par le module de traction 15, permet d'éviter l'étape de chargement d'un nouveau film dans le module de traction 15.

Les dévidoirs 2 sont essentiellement transversaux à la direction d'avance des produits, le chargeur ou rotor 10 se situant entre les arbres de support 3 d'une part et le rouleau de renvoi 5 d'autre part.

La figure 5 montre une section d'extrémité du rotor 10. Il est pourvu d'un moyen de fixation 14 dans la partie supérieure, pour retenir l'extrémité libre du film dévidé 6. Ce moyen de fixation 14 prend la forme d'une paire de plaques ou lamelles, entre lesquelles est prise ladite extrémité, et qui vient se loger dans une rainure du rotor 10 prévue à cet effet. Pour fixer un film de réserve 8 de façon ergonomique, le rotor 10 est positionné pour que le moyen de fixation 14 soit en partie haute ou au moins accessible pour un opérateur.

Le rotor 10 présente aussi, se faisant face, deux zones de coopération 17 avec chaque fois une barre de soudure 13. Chaque zone est donc là pour la fixation d'un autre film au film fourni par la bobine montée sur le dévidoir 2 dans le prolongement de ladite zone lorsque le rotor 10 est au repos avec le moyen de fixation 14 vers le haut. Une zone 17 peut comprendre deux lamelles 16 contre lesquelles la barre de soudure 13 peut s'appuyer, chaque lamelle plate étant destinée à l'une des soudures successives à réaliser et formant une surface de réception 16. Le fait d'avoir une zone 17 la plus plane possible augmente la taille de la soudure et donc sa résistance mécanique.

La surface de réception 16 peut prendre la forme d'une lamelle plane en silicone par exemple.

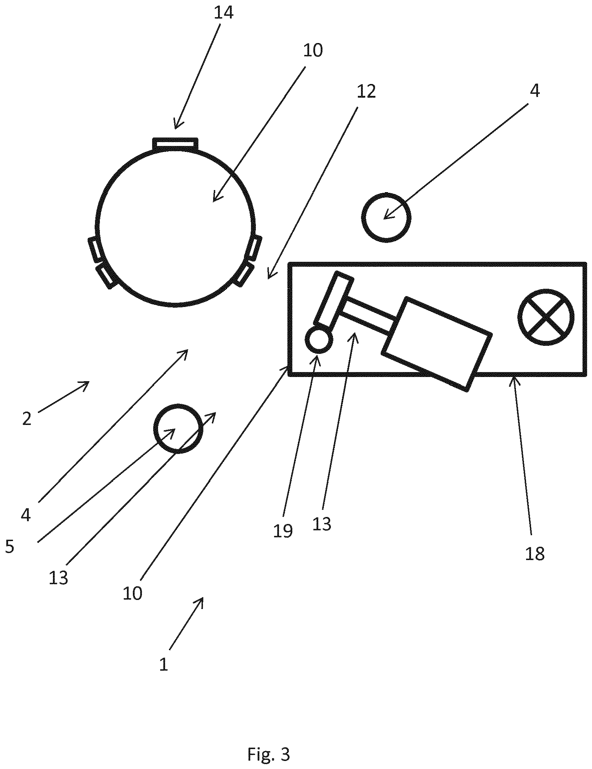

Comme le montre la figure 3, afin de permettre un accès et une maintenance aisés, chaque barre de soudure 13 est préférablement montée avec, à ses extrémités, une platine 18 pivotante autour d'un axe fixe dans la machine et parallèle à ladite barre. Par pivotement des platines, la barre de soudure 13 est alors éloignée du rotor 10 et rendue plus accessible à un opérateur. En outre, la barre de soudure 13 est préférablement démontable par rapport à ces platines 18, et peut préférablement y être enfichée dans un mouvement parallèle à l'axe du rotor 10. Ainsi, pour une maintenance qui peut être le changement de la barre de soudure 13, il suffit de tirer hors du dispositif de fourniture 1 la barre de soudure 13 concernée, puis d'en glisser une autre par translation parallèle à l'axe de rotation, et donc transversale à l'avance du film. Le pivotement des platines 18 peut alors servir à libérer la barre de soudure 13 et/ou donner accès à la surface périphérique du rotor 10, en particulier celle contre laquelle vient normalement la barre de soudure 13.

Bien que les figures annexées illustrent le cas de deux dévidoirs 2 se faisant face, il est envisageable que le dispositif de fourniture 1 contienne plus de deux dévidoirs 2. Dans ce genre de configuration, le guidage 4 peut être commun à plusieurs arbres de support 3.

Concernant l'opération du dispositif de fourniture 1, au moins une bobine de réserve 9 peut être chargée sans attendre la fin de la bobine dévidée 7, et ce par un opérateur ou par un machine.

Grâce à l'invention, il est ainsi possible d'obtenir un dispositif de fourniture 1 de film à une machine de fardelage qui présente une autonomie élevée, ainsi qu'une bonne ergonomie et une grande simplicité d'utilisation.

## Revendications

1. Dispositif de fourniture (1) de film pour conditionnement de produits par fardelage, ledit dispositif comprenant
- au moins deux dévidoirs (2), comprenant chacun au moins un arbre support (3) pour bobine de film ainsi qu'un guidage (4) de film,
- un rouleau de renvoi (5), jusqu'auquel, en fonctionnement, circule un film, dit film dévidé (6), depuis une bobine d'un des dévidoirs (2), dite bobine dévidée (7) ;
- un chargeur, pour amener à proximité du film dévidé (6) le film, dit film de réserve (8), d'une bobine de l'au moins un autre dévidoir (2), dite bobine de réserve (9), ledit chargeur comprenant un rotor (10), qui enroule autour de lui le film de réserve (8) de sorte à l'amener à proximité du film dévidé (6),
le dispositif de fourniture **caractérisé en ce qu'**il comprend:
un poste de soudure (12) associé à chaque dévidoir (2) et configuré pour relier le film de réserve (8) au film dévidé (5) en les soudant par un premier cordon de soudure,
ledit dispositif étant configuré à faire à nouveau tourner le rotor (10) dans le même sens de défilement que celui utilisé pour l'enroulement du film de réserve (8) autour du rotor (10), et à relier le film de réserve (8) au film dévidé (6) en les soudant par un deuxième cordon de soudure.

2. Dispositif selon la revendication 1, où
le rotor (10), le rouleau de renvoi (5) et les dévidoirs (2) sont tels que la périphérie du rotor (10), sur laquelle s'enroule le film de réserve (8), s'étend à proximité du film dévidé (6), dans la zone entre, d'une part, le guidage (4) du dévidoir (2) de la bobine dévidée (7), et, d'autre part, le rouleau de renvoi (5).

3. Dispositif selon l'une quelconque des revendications 1 ou 2, où
les au moins deux dévidoirs se font face, le rotor (10) et le rouleau de renvoi (5), sensiblement en vis-à-vis l'un de l'autre, étant montés entre eux.

4. Dispositif selon l'une quelconque des revendications 1 à 3, **caractérisé en ce que**
ledit poste de soudure (12) comprend deux mâchoires entre lesquelles sont pris les deux films, l'une des mâchoires étant formée par la périphérie du rotor (10), l'autre étant disposée en vis à vis.

5. Dispositif selon la revendication 4, où
la mâchoire en vis-à-vis du rotor (10) prend la forme d'une barre de soudure (13) chauffante, mobile en direction du rotor (10) pour presser contre lui les deux films ensemble.

6. Dispositif selon l'une quelconque des revendications 4 ou 5, où
la mâchoire en vis-à-vis du rotor (10) est interchangeable et démontable.

7. Dispositif selon l'une quelconque des revendications 1 à 6, où
le chargeur présente un moyen de fixation (14) par aimantation pour retenir une portion d'extrémité libre du film de réserve (8) à la périphérie du rotor (10).

8. Machine de conditionnement par fardelage, comprenant un convoyeur à tapis sur lequel se trouvent des produits à enrober, un module d'enrobage au sein duquel les produits sont enrobés de film, ainsi qu'un four de rétreint thermique dans lequel circulent ultérieurement les produits enrobés, ladite machine comprenant, pour son alimentation en film, un dispositif de fourniture (1) selon l'une quelconque des revendications 1 à 7.

9. Procédé de fourniture en film d'une machine de conditionnement par fardelage, ledit procédé comprenant des étapes consistant essentiellement à
envoyer contre un rouleau de renvoi (5) un film, dit film dévidé (6), depuis une bobine, dite bobine dévidée (7),
permuter de bobine pour continuer à fournir un film depuis une autre bobine, jusqu'alors bobine de réserve (9), et, pour cela, stopper le film dévidé (6) et le relier au film, dit film de réserve (8), de ladite bobine de réserve (9),
ledit procédé comprenant une étape de chargement consistant essentiellement à faire tourner un rotor (10) à la périphérie duquel est maintenue une partie d'extrémité du film de réserve (8), de sorte à enrouler le film de réserve (8) autour dudit rotor (10) et l'amener alors à proximité du film dévidé (6) pour les relier,
ledit procédé **caractérisé en ce que**, le film de réserve (8) est relié au film dévidé (6) en les soudant l'un à l'autre contre le rotor au niveau d'au moins deux cordons de soudure successifs dans le sens de défilement du film de réserve (8).

10. Procédé selon la revendication 9, **caractérisé en ce qu'**il comprend une étape consistant essentiellement à désolidariser la bobine dévidée (7), et ce en l'entraînant dans une rotation qui tend jusqu'à la rupture le film dévidé (6), en amont de la soudure.

11. Procédé selon l'une quelconque des revendications 9 ou 10, **caractérisé en ce qu'**il comprend une étape de préparation de la permutation, au cours de laquelle le rotor (10) est tourné jusqu'à présenter, en partie supérieure, un moyen de fixation (14) dont il est pourvu pour retenir le film de réserve (8).

## Patentansprüche

1. Vorrichtung zum Liefern (1) einer Folie zur Verpackung von Produkten durch Bündeln, wobei die Vorrichtung enthält
- mindestens zwei Haspeln (2), die je mindestens eine Tragwelle (3) für eine Folienspule sowie eine Folienführung (4) enthalten,
- eine Umlenkrolle (5), bis zu der im Betrieb eine abgehaspelte Folie (6) genannte Folie sich von einer abgehaspelte Spule (7) genannten Spule einer der Haspeln (2) bewegt;
- ein Ladegerät, um die Vorratsfolie genannte Folie (8) einer Vorratsspule (9) genannten Spule der mindestens einen anderen Haspel (2) in die Nähe der abgehaspelten Folie (6) zu bringen, wobei das Ladegerät einen Rotor (10) enthält, der die Vorratsfolie (8) um sich wickelt, um sie in die Nähe der abgehaspelten Folie (6) zu bringen,
wobei die Liefervorrichtung **dadurch gekennzeichnet ist, dass** sie enthält:
eine Schweißstation (12), die jeder Haspel (2) zugeordnet und konfiguriert ist, die Vorratsfolie (8) mit der abgehaspelten Folie (5) zu verbinden, indem sie durch eine erste Schweißraupe geschweißt werden,
wobei die Vorrichtung konfiguriert ist, den Rotor (10) erneut in der gleichen Durchlaufrichtung wie diejenige zu drehen, die für das Aufwickeln der Vorratsfolie (8) um den Rotor (10) verwendet wurde, und die Vorratsfolie (8) mit der abgehaspelten Folie (6) zu verbinden, indem sie durch eine zweite Schweißraupe geschweißt werden.

2. Vorrichtung nach Anspruch 1, wobei der Rotor (10), die Umlenkrolle (5) und die Haspeln (2) so sind, dass der Umfang des Rotors (10), auf den die Vorratsfolie (8) sich aufwickelt, sich in der Nähe der abgehaspelten Folie (6) in der Zone zwischen einerseits der Führung (4) der Haspel (2) der abgehaspelten Spule (7) und andererseits der Umlenkrolle (5) erstreckt.

3. Vorrichtung nach einem der Ansprüche 1 oder 2, wobei die mindestens zwei Haspeln einander gegenüberliegen, wobei der Rotor (10) und die Umlenkrolle (5), im Wesentlichen einander gegenüber, zwischen ihnen montiert sind.

4. Vorrichtung nach einem der Ansprüche 1 bis 3, **dadurch gekennzeichnet, dass** die Schweißstation (12) zwei Backen enthält, zwischen denen die zwei Folien gehalten werden, wobei eine der Backen vom Umfang des Rotors (10) gebildet wird, während die andere gegenüber angeordnet ist.

5. Vorrichtung nach Anspruch 4, wobei die Backe gegenüber dem Rotor (10) die Form eines Heizschweißstabs (13) annimmt, der in Richtung des Rotors (10) beweglich ist, um die zwei Folien zusammen gegen ihn zu pressen.

6. Vorrichtung nach einem der Ansprüche 4 oder 5, wobei die Backe gegenüber dem Rotor (10) austauschbar und ausbaubar ist.

7. Vorrichtung nach einem der Ansprüche 1 bis 6, wobei das Ladegerät eine Befestigungseinrichtung (14) durch Magnetisierung aufweist, um einen freien Endabschnitt der Vorratsfolie (8) am Umfang des Rotors (10) zurückzuhalten.

8. Maschine zur Verpackung durch Bündeln, die ein Förderband, auf dem sich zu umhüllende Produkte befinden, ein Umhüllungsmodul, in dessen Innerem die Produkte mit Folie umhüllt werden, sowie einen Wärmeschrumpfofen enthält, in dem die umhüllten Produkte sich später bewegen, wobei die Maschine für ihre Versorgung mit Folie eine Liefervorrichtung (1) nach einem der Ansprüche 1 bis 7 enthält.

9. Verfahren zur Belieferung einer Maschine zur Verpackung durch Bündeln, wobei das Verfahren Schritte enthält, die hauptsächlich darin bestehen,
eine abgehaspelte Folie (6) genannte Folie von einer abgehaspelte Spule (7) genannten Spule gegen eine Umlenkrolle (5) zu schicken,
einen Spulenaustausch durchzuführen, um weiter eine Folie von einer anderen Spule, bis dahin Vorratsspule (9), zu liefern, und hierzu die abgehaspelte Folie (6) zu stoppen und sie mit der Vorratsfolie (8) genannten Folie der Vorratsspule (9) zu verbinden,
wobei das Verfahren einen Ladeschritt enthält, der hauptsächlich darin besteht, einen Rotor (10) zu drehen, an dessen Umfang ein Endbereich der Vorratsfolie (8) gehalten wird, um die Vorratsfolie (8) um den Rotor (10) zu wickeln und sie dann in die Nähe der abgehaspelten Folie (6) zu bringen, um sie zu verbinden,
wobei das Verfahren **dadurch gekennzeichnet ist, dass** die Vorratsfolie (8) mit der abgehaspelten Folie (6) verbunden wird, indem sie aneinander gegen den Rotor im Bereich von mindestens zwei aufeinanderfolgenden Schweißraupen in Durchlaufrichtung der Vorratsfolie (8) geschweißt werden.

10. Verfahren nach Anspruch 9, **dadurch gekennzeichnet, dass** es einen Schritt enthält, der hauptsächlich darin besteht, die abgehaspelte Spule (7) zu trennen, und dies, indem sie in eine Drehung versetzt wird, die die abgehaspelte Folie (6) stromaufwärts vor der Schweißnaht bis zum Reißen spannt.

11. Verfahren nach einem der Ansprüche 9 oder 10, **dadurch gekennzeichnet, dass** es einen Schritt der Vorbereitung des Austauschs enthält, während dessen der Rotor (10) gedreht wird, bis er im oberen Bereich eine Befestigungseinrichtung (14) präsentiert, mit der er versehen ist, um die Vorratsfolie (8) zurückzuhalten.

## Claims

1. Device (1) for delivery of film for packaging products by bundling, said device comprising
- At least two reels (2), each comprising at least one support shaft (3) for a film roll as well as a film guide (4),
- A return roller (5), up to which, during operation, a film, a so-called unwound film (6), travels, from a roll of one of the reels (2), a so-called unwound roll (7);
- A loader, for bringing the film, so-called reserve film (8), from one roll of the at least one other reel (2), so-called reserve roll (9), close to the unwound film (6), said loader comprises a rotor (10), which rolls up the reserve film (8) around it in such a way as to bring it close to the unwound film (6),
the delivery device **characterized in that** it comprises:
a welding station (12) associated with each reel (2) and configured for connecting the reserve film (8) to the unwound film (5) by welding them by a first welding bead,
said device being configured for making the rotor (10) rotate again in the same direction of travel as the one used for the rolling-up of the reserve film (8) around the rotor (10),
and for connecting the reserve film (8) to the unwound film (6) by weldeding them by a second welding bead.

2. Device according to Claim 1, where
the rotor (10), the return roller (5), and the reels (2) are such that the periphery of the rotor (10), on which the reserve film (8) rolls up, extends close to the unwound film (6), in the zone between, on the one hand, the guide (4) of the reel (2) of the unwound roll (7), and, on the other hand, the return roller (5).

3. Device according to any of Claims 1 or 2, where
the at least two reels face one another, with the rotor (10) and the return roller (5), essentially opposite one another, being mounted between one another.

4. Device according to any of Claims 1 to 3, **characterized in that**
said welding station (12) comprises two jaws, between which the two films are taken, with one of the jaws being formed by the periphery of the rotor (10), and the other being placed opposite.

5. Device according to Claim 4, where
the jaw opposite the rotor (10) takes the form of a heating sealing bar (13), movable in the direction of the rotor (10) for pressing the two films together against it.

6. Device according to any of Claims 4 or 5, where
the jaw opposite the rotor (10) is interchangeable and detachable.

7. Device according to any of Claims 1 to 6, where
the loader has a means (14) for attachment by magnetization to hold a portion of the free end of the reserve film (8) on the periphery of the rotor (10).

8. Machine for packaging by bundling, comprising a belt conveyor on which are located products to be wrapped, a wrapping module within which the products are wrapped with film, as well as a thermal contraction furnace into which the wrapped products subsequently travel, where said machine comprises, for its feed of film, a delivery device (1) according to any of Claims 1 to 7.

9. Method for delivery of film of a machine for packaging by bundling, with said method comprising steps consisting essentially in
sending a film, a so-called unwound film (6), from a roll, a so-called unwound roll (7), against a return roller (5),
swapping-out a roll to continue to deliver a film from another roll, until then a reserve roll (9), and, for this purpose, stopping the unwound film (6) and connecting it to the film, a so-called reserve film (8), of said reserve roll (9),
said method comprising
a loading step, essentially consisting in making a rotor (10) rotate on the periphery of which an end part of the reserve film (8) is held, in such a way as to roll up the reserve film (8) around said rotor (10) and then to bring it close to the unwound film (6) to connect them,
said method being **characterized in that**,
the reserve film (8) is connected to the unwound film (6) by welding them one to the other against the rotor (10) in the area of at least two successive welding beads in the direction of travel of the reserve film (8).

10. Method according to Claim 9, **characterized in that**
it comprises a step consisting essentially in disengaging the unwound roll (7), by driving it in a rotational motion that tends to break the unwound film (6), upstream from the weld.

11. Method according to any of Claims 9 or 10, **characterized in that**
it comprises a step for preparing the swapping-out, during which the rotor (10) is rotated until having, at the top, an attachment means (14) with which it is provided to hold the reserve film (8).
